# EUROPEAN PATENT SPECIFICATION

(11) **EP 2 321 582 B1**
(45) Date of publication and mention of the grant of the patent: **13.12.2017**
(21) Application number: 08779015.0
(22) Date of filing: 10.07.2008
(51) Int. Cl.: F16K 24/04, F24D 11/00, F24D 17/00

(54) **DEGASSING DEVICE FOR A SOLAR HEATING SYSTEM**
ENTGASUNGSVORRICHTUNG FÜR EIN SOLARHEIZSYSTEM
DISPOSITIF DE DÉGAZAGE POUR SYSTÈME DE CHAUFFAGE SOLAIRE

(43) Date of publication of application: 18.05.2011
(73) Proprietor: Spiro Enterprises B.V., 5845 EM Sint Anthonis (NL)
(72) Inventor: LAMERS, Antonius Gerardus Wilhelmus Maria, NL-5845 EM Sint Anthonis (NL)
(74) Representative: V.O.
(86) International application number: PCT/NL2008/050467
(87) International publication number: WO 2010/005284

(56) References cited:
- EP-A- 1 041 324
- EP-A1- 0 444 403
- DE-A1- 4 318 480
- GB-A- 2 426 044
- US-A- 1 912 867
- US-A- 2 167 433
- US-A- 4 230 142
- US-A- 4 765 537
- US-A1- 2003 221 560
- US-B1- 6 427 712

## Description

The invention relates to a degassing device for a solar heating system comprising a closed heating fluid circuit with a solar collector for heating therein liquid heating fluid using solar power. The solar heating system may comprise a heat exchanger for providing heat to a buffer vessel, and/or to a secondary closed eating fluid circuit, such as a central heating system, and fluid communications for transporting heated liquid heating fluid from the solar collector to the heat exchanger and for transporting cooled liquid heating fluid from the heat exchanger to the solar collector.

Such solar heating systems are known per se. In these solar heating systems, gas may be present within the closed heating circuit. The gas may be free gas, e.g. bubbles or gas heads within components in the closed circuit, or gas dissolved in the liquid heating fluid. It is preferred to remove the gas from the liquid heating fluid.

Solar heating systems are known which have a degassing device comprising a valve which is, e.g. manually, opened during maintenance for removing gas from the closed circuit. Also, automatic degassing devices are known, such as automatic micro-bubble degassing devices. Preferably, the automatic degassing device is placed at the position in the closed heating circuit where the temperature of the liquid heating fluid is highest, i.e. at the exit of the solar collector. At this position, the dissolvability of gas in the liquid heating fluid is lowest and gas can be separated from the liquid heating fluid most efficiently.

A very specific problem, unknown in traditional fuel fed heating systems, arising in solar heating systems is that, e.g. during summer, in the solar collector the liquid heating fluid may be heated to such an extent that it boils. The solar collector and/or the heating fluid circuit may then comprise heating fluid in the vapour phase. The heating fluid in the vapour phase, however, may exit the closed heating circuit via the, e.g. automatic, degassing device. This may lead to unwanted heating fluid depletion, loss of pressure in the heating fluid circuit, de-mixing of mixed heating fluids and even hazardous situations when the heating fluid in the vapour phase exits the degassing device.

It is an object of the invention to provide an improved solar heating system that does not have the above problems.

Thereto, according to the invention, is provided a degassing device comprising a valve and a valve actuator device arranged for automatically opening the valve for allowing gas to exit the closed fluid circuit when an amount of the gas present in the degassing device is more than a predetermined threshold amount, wherein the valve actuator device is further arranged for automatically closing the valve for preventing gas and/or heating fluid, e.g. in the vapour phase, to exit the closed fluid circuit when the temperature of the gas and/or heating fluid is above a predetermined threshold temperature. Thus, the valve actuator device may allow gas to exit the closed circuit as in the known automatic degassing device, whereas the valve actuator device further closes (or keeps closed) the valve when the temperature of the gas and/or heating fluid is above the predetermined threshold temperature. Preferably, the threshold temperature is chosen near the boiling temperature of the heating fluid, e.g. between 0.8 to 1 times the boiling temperature, preferably between 0.9 and 0.99 times the boiling temperature, more preferably between 0.95 and 0.98 times the boiling temperature. Then the valve may be closed near the boiling temperature, so that any vapour generated when the heating fluid boils, is prevented from exiting the closed circuit.

Document US4,230,142 discloses a vent/vacuum breaker float valve assembly including a float sub-assembly that moves a seal into engagement with a vent port seat when liquid enters the body of the valve to seal the inner valve chamber when all the air trapped in the chamber has been exhausted. The valve assembly also includes a poppet valve sub-assembly which closes and remains closed so long as the valve chamber is pressurized. However, when the liquid is removed from the valve chamber both the vent valve and the poppet valve open to the atmosphere to break the vacuum within the chamber and to allow air to replace the draining liquid.

Document US4,765,537 discloses a radiator vent valve including a freely movable float in a cylindrical casing. The float is formed from a solid sphere of polypropylene. The float normally rests on a bimetallic thermostatic strip which has its ends folded under. The thermostatic strip rests on the bottom wall of the casing and is held in place by gravity, i.e., no fasteners or mechanical connection is made to the thermostatic strip.

Document US2003/0221560A1 discloses a de-aerator that includes a concentrator inserted in the path of liquid conveyed through a pipe coupling for aggregating gas, and directing the gas to a cavity. The cavity is connected with a cap comprises a vent adapted to open and shut in response to lowering and raising of the level of the liquid in the cavity below/above a threshold, respectively.

Document US2,167,433 discloses an air vent having a casing with disposed therein a combined float and temperature responsive element, which element operates to prevent the escape of fluid other than air.

Document EP0444403A1 discloses a method for controlling an installation with solar collectors providing that a threshold value is specified for a temperature measured at a heat emitting device and that when the temperature at the heat emitting device exceeds the threshold value, a heat carrier flow is interrupted until the temperature at the solar collector has reached a specified limiting value.

In an embodiment the valve actuator device comprises a first valve actuator for automatically opening the valve for allowing gas to exit the closed fluid circuit when the amount of the gas present in the degassing device is more than the predetermined threshold amount, and a second valve actuator for automatically closing the valve for preventing gas and/or heating fluid to exit the closed fluid circuit when the temperature of the gas and/or heating fluid is above the predetermined threshold temperature. Thus, the valve actuator device may have a simple structure. According to the invention, the second valve actuator is arranged for preventing the first valve actuator from opening the valve when the temperature of the gas and/or heating fluid is above the predetermined threshold temperature. Thus, the temperature activated second actuator overrules the amount-of-gas activated first actuator. This provides a safe situation in that no vapour will exit the closed circuit, regardless of the amount of gas and/or vapour in the degassing device. Still according to the invention, the first valve actuator comprises a float operable to selectively open or close the valve dependent on the amount of gas present in the degassing device. The float may e.g. be connected to the valve to deflect a closing member of the valve with respect to a valve seat. Still according to the invention, the second valve actuator comprises a temperature activated structure operable for selectively allowing or preventing the first valve actuator to open the valve. In this way the second valve actuator acts upon the first valve actuator to allow or disallow the first actuator to operate the valve, depending on the temperature of the gas, vapour and/or liquid. This provides a very simple construction and a very safe temperature control.

In an embodiment the temperature activated structure comprises a float support for supporting the float, and a structure arranged for positioning the float support in a first position when the temperature of the gas and/or heating fluid is below the threshold temperature, in which first position the float is free to open the valve, and arranged for positioning the float support in a second position when the temperature of the gas and/or heating fluid is above the threshold temperature, in which second position the float is prevented from opening the valve. Thus, a very simple construction may be obtained.

In one form, the structure comprises a bi-metal element. The bi-metal element reacts to the temperature of the gas and/or heating fluid by changing a dimension and/or geometry. Preferably, the structure comprises a stack of bi-metal elements. Thus the deflection or force exerted by the bi-metal elements may be increased. In an embodiment, the bi-metal elements are bent to form bi-stable bi-metal elements. The bi-stable bi-metal elements may snap from one bending direction to another upon temperature change. Hence a very fast actuation of the second valve actuator may be obtained. Preferably, the stack comprises non-bimetal, such as metal, elements interleaved between the bi-metal elements. This may be used with advantage to increase the stroke of the structure at relatively low costs.

In an other form, the structure comprises a volume of wax. The volume of wax may be contained in a container. A change in volume of the wax when changing from solid to liquid may be used to cause a deflection or stroke required for the second valve actuator.

Preferably, the second valve actuator is substantially bi-stable. This provides the advantage that the second valve actuator may change from a state blocking the valve to a state releasing the valve, or vise versa, within a short temperature range (low hysteresis). Thus, the second valve actuator very accurately actuates the valve. Moreover, the amount of heat required to activate the second actuator may be relatively low, so that the second actuator responds quickly to the temperature of the gas and/or heating fluid increasing to above the threshold temperature.

Preferably, the degassing device is designed as a micro-bubble degassing device. Thereto the degassing device may comprise a separating element within a housing of the degassing device. The separating element functions to generate, grow and separate bubbles. The bubbles then migrate towards a head portion of the degassing device. This type of degassing device has been found to be very effective in removing dissolved gas from the heating liquid in the closed circuit.

The invention also relates to a solar heating system comprising a degassing device according the invention, to a use of such degassing device for degassing a solar heating system, and to a method for degassing a solar heating system.

The invention will now be elucidated in the following, non-limiting, examples, referring to the drawing in which:
Fig. 1 shows a prior art embodiment of a micro bubble degassing device;
Figs. 2a and 2b show an example of a first embodiment of a degassing device according to the invention;
Figs. 2c and 2d show a variation of the first embodiment shown in Figs. 2a and 2b;
Figs. 3a and 3b show an example of a second embodiment of the degassing valve according to the invention;
Figs. 4a and 4b show an example of a third embodiment of the degassing valve according to the invention;
Figs. 5a and 5b show an example of a fourth embodiment of the degassing valve according to the invention;
Figs. 6a and 6b show an example of a fifth embodiment of the degassing valve according to the invention; and
Fig. 7 shows an example of a solar heating system according to the invention.

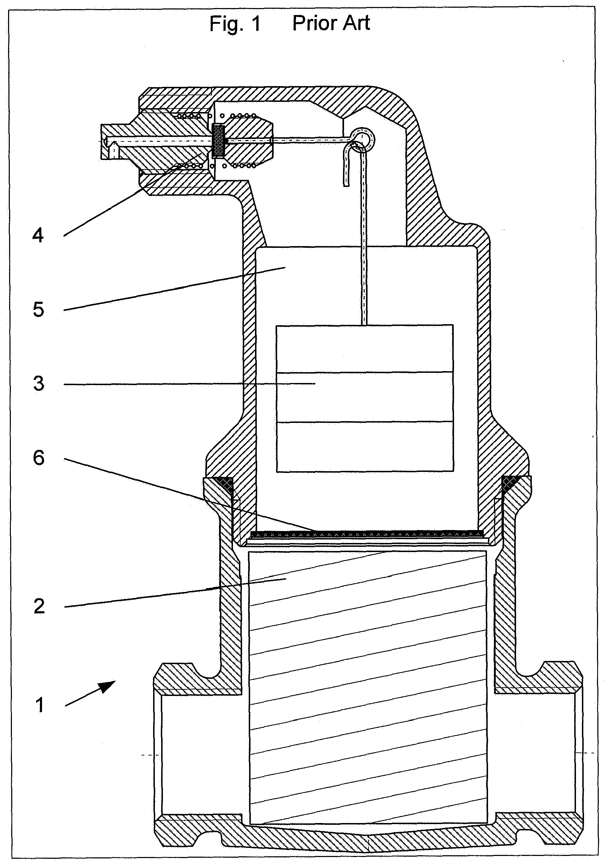

Fig. 1 shows a prior art embodiment of a micro bubble degassing device. The degassing device 1 comprising a separating element 2 for separating gas bubbles from the liquid heating fluid. It is noted that herein "liquid heating fluid" is also referred to as "heating liquid". The degassing device further comprises a float 3. The vertical position of the float is determined by a level of the heating liquid inside the degassing device 1, and thus by the amount of gas (head) present in the degassing device 1. The float opens or closes a valve 4 depending on the vertical position of the float. When gas separated from the heating liquid collects in a head 5 of the degassing device 1, the liquid level will drop, the vertical position of the float 3 lower and the valve 4 will be opened, allowing the gas to exit the degassing device 1. This in turn causes gas to leave the head 5, the liquid level and float to rise and the valve 4 to be closed again.

In this example the degassing device 1 comprises a float support 6 which supports the float 3 in a vertically lowermost position in order to protect the valve 4 against excessive vertical motion.

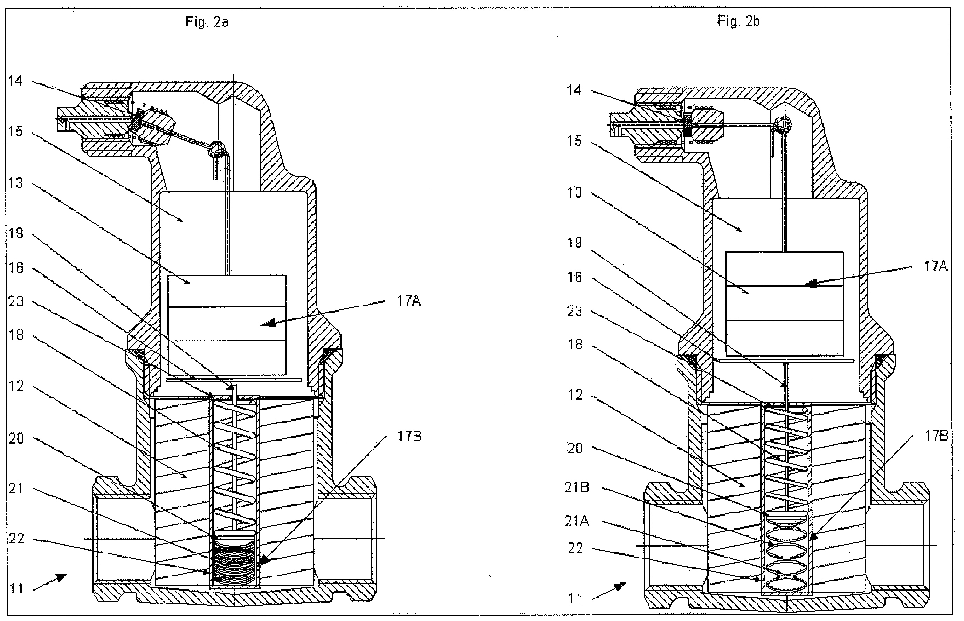

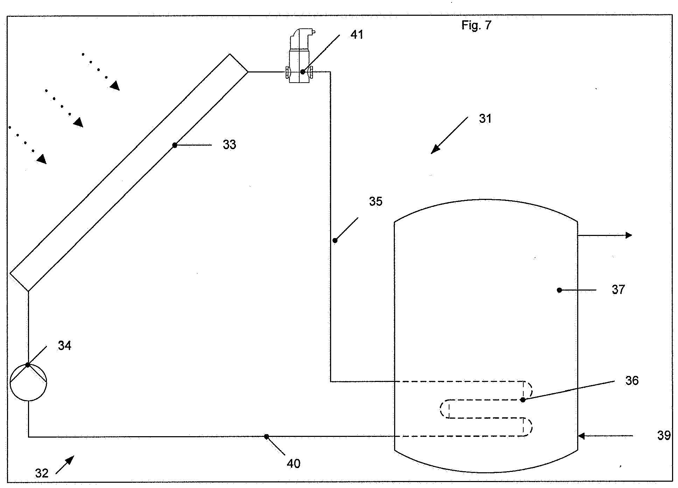

Figs. 2a and 2b show an example of a first embodiment of a degassing device 11 according to the invention for use in a solar heating system 21 according to the invention (see Fig. 7).

In the example of Figs. 2a and 2b the degassing device 11 is designed as a micro bubble degassing device. The degassing device 11 comprising a separating element 12 for separating gas bubbles from the heating liquid. The degassing device further comprises a float 13. The float 13 is connected to a valve 14 for opening or closing the valve 14 depending on a vertical position of the float.

In the example of Figs. 2a and 2b the degassing device 11 further comprises a float support 16 which in Fig. 2a supports the float 13 in a vertically lowermost position in order to protect the valve 14 against excessive vertical motion. According to the invention, the float support 16 is movable with respect to the valve 14 of the degassing device 11. In Fig. 2b the float support 16 is shown in an uppermost position. In this uppermost position the float 13 is lifted to such a level that it can not activate the valve 14.

In Figs. 2a and 2b the float support 16 comprises a stem 19 extending in a direction away from the float 13. The lower end of the stem 19 comprises an abutment surface 20. The abutment surface abuts against a stack of bent discs 21A,21B. In this example the stack comprises an alternation of bent metal discs 21A and bent bi-metal discs 21B. In this example a spring 18 is mounted to provide a bias force on the abutment surface 20, biasing the float support 16 to the lowermost position. It will be appreciated that the spring is not required, since gravity may be relied upon to bias the float support to the lowermost position. Nevertheless, actively providing the biasing force, e.g. using the spring, does increase reliability of the degassing device, as e.g. fouling has less effect. In this example the discs 21A, 21B, the abutment surface 20 and the spring 18 are contained within a tube 22 having a support surface 23 for the spring 18.

The degassing device 11 can be operated as follows.

In a first condition, a temperature of the liquid, and hence the temperature of the device 11 is below a predetermined threshold temperature. In this first condition the discs 21A, 21B are nested as shown in Fig. 2a and the float support 16 is in its lowermost position.

In the first condition, the vertical position of the float 13 is determined by a level of the heating liquid inside the degassing device 11, and thus by the amount of gas (head) present in the degassing device 11. The float opens or closes a valve 14 depending on the vertical position of the float 13. The float 13 thus forms a first valve actuator 17A. When gas separated from the heating liquid collects in a head 15 of the degassing device 11, the liquid level will drop, the vertical position of the float 13 lower and the valve 14 will be opened, allowing the gas to exit the degassing device 11. This in turn causes gas to leave the head 15, the liquid level and float 13 to rise and the valve 14 to be closed again.

In a second condition, the temperature of the liquid, and hence the temperature of the device 11 is above the predetermined threshold temperature. In this second condition a bending direction of the bi-metal discs 21B is inverted with respect to the first condition as shown in Fig. 2b and the float support 16 is in its uppermost position. In this embodiment the vertical stroke of the stack of discs 21A, 21B is approximately 10 mm, although other stroke lengths are conceivable.

In the second condition, the vertical position of the float 13 is not, or hardly, determined by the level of the heating liquid inside the degassing device 11. The float support 16 holds the float 13 in the uppermost position, regardless of the liquid level, and thus regardless of the amount of gas (head) present in the degassing device 11. The float 13 is therefore unable to open the valve 14. Thus, it is ensured that no gas exits the device 11 if the temperature of the liquid is above the predetermined threshold temperature. The stack of metal and bi-metal discs 21A, 21B thus forms a temperature activatable second valve actuator 17B.

More in general, the degassing device 11 comprises the valve actuator 17A,17B arranged for opening the valve 14 when the amount of the gas present in the degassing device 11 is more than a predetermined threshold amount and the temperature of the gas and/or liquid is below a predetermined threshold temperature, and arranged for closing the valve 14 when the amount of the gas present in the degassing device 11 is below the predetermined threshold pressure and/or the temperature of the gas and/or fluid is above the predetermined threshold temperature.

The bi-metal discs 21B may be designed as bi-stable elements. Hence, a minor change in temperature of the bi-metal disc 21B will flip ("snap-action") the bending direction of the disc. Thus, the temperature activatable second valve actuator 17B is obtained which is substantially bi-stable. Hence, the degassing device 11 can accurately respond to the temperature of the heating liquid, to allow gas to exit through the valve when the temperature is below the threshold temperature, and to prevent gas from exiting the valve 14 when the temperature is above the threshold temperature. Also, the reaction time of the substantially bi-stable temperature activatable second valve actuator 17B is short.

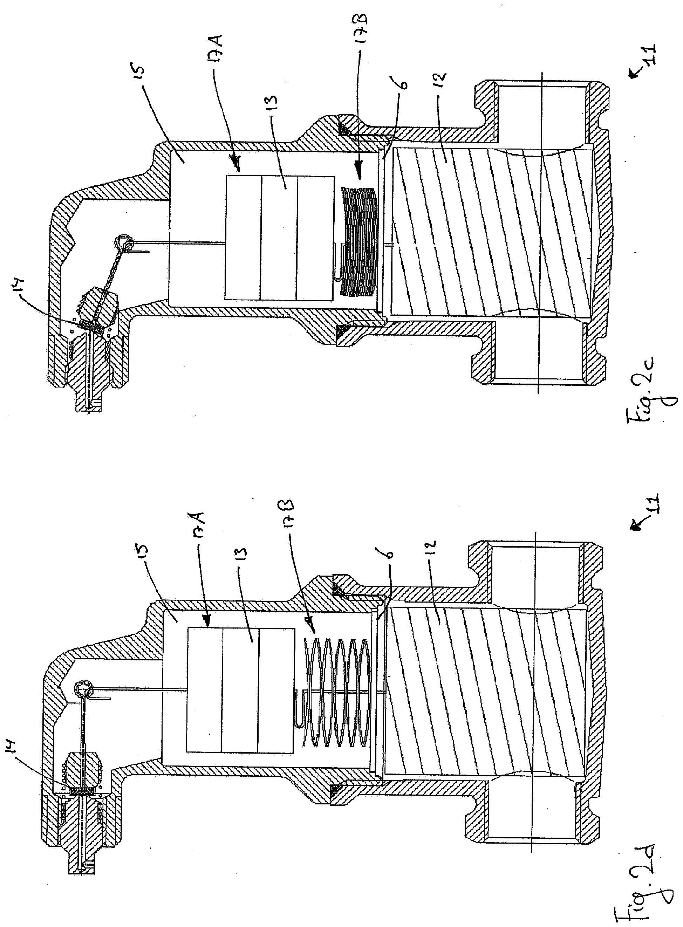

Figs. 2c and 2d show a variation of the degassing device 11 shown in Figs. 2a and 2b. In the example of Figs. 2c and 2d, the stack of metal discs 21A and bimetal discs 21B is placed between the float support 6 and the float 13. The degassing device 11 shown in Figs. 2c and 2d functions similar to the device 11 shown in Figs. 2a and 2b. It will be appreciated that in this example the stack of discs 21A,21B acts directly upon the float 13 or a stem of the float 13. The construction of the degassing device 11 of Figs. 2c and 2d is believed to be more simple than that of Figs. 2a and 2b.

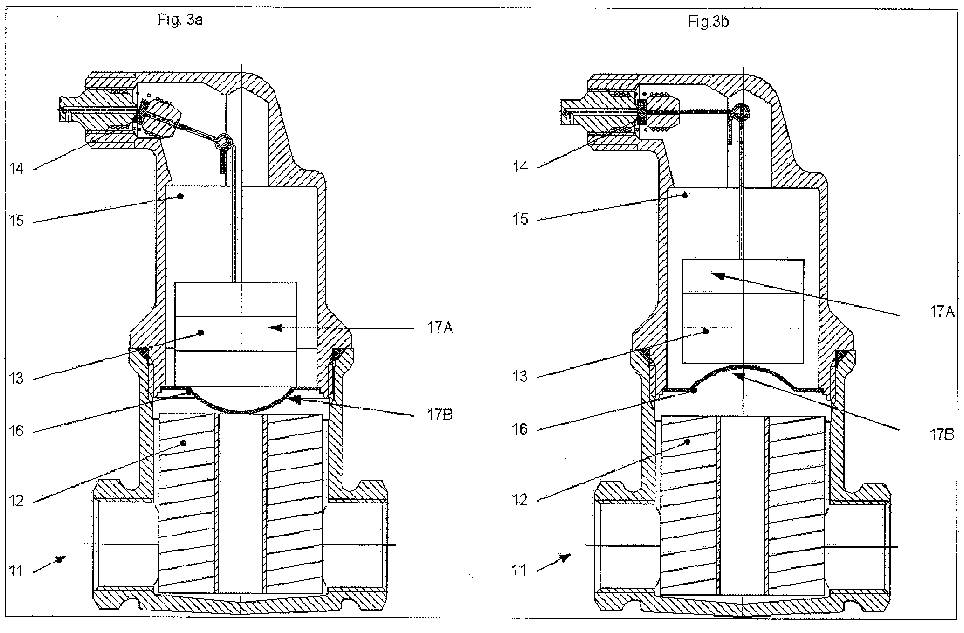

Figs. 3a and 3b show a second embodiment of the degassing valve 11 according to the invention. In this example the temperature activatable second valve actuator 17B comprises a bi-metal plate. In this example, the bi-metal plate is inserted into the housing and forms either a convex or concave float support 16. In the first condition, below the threshold temperature, the bi-metal plate is concave, when viewed from the float 13, and supports the float in the lowermost position (see Fig. 3a). In the second condition, above the threshold temperature, the bi-metal plate is convex, when viewed from the float 13, and supports the float in the uppermost position (see Fig. 3b). The curving of the bi-metal plate, depending on the temperature, is used to displace the float support 16 as described with respect to Figs. 2a and 2b. Note that a gap is drawn between the float 13 and the bi-metal plate in Figs. 3a and 3b. In reality the float 13 may actually rest upon the bi-metal plate, depending on a level of the heating liquid at the float 13.

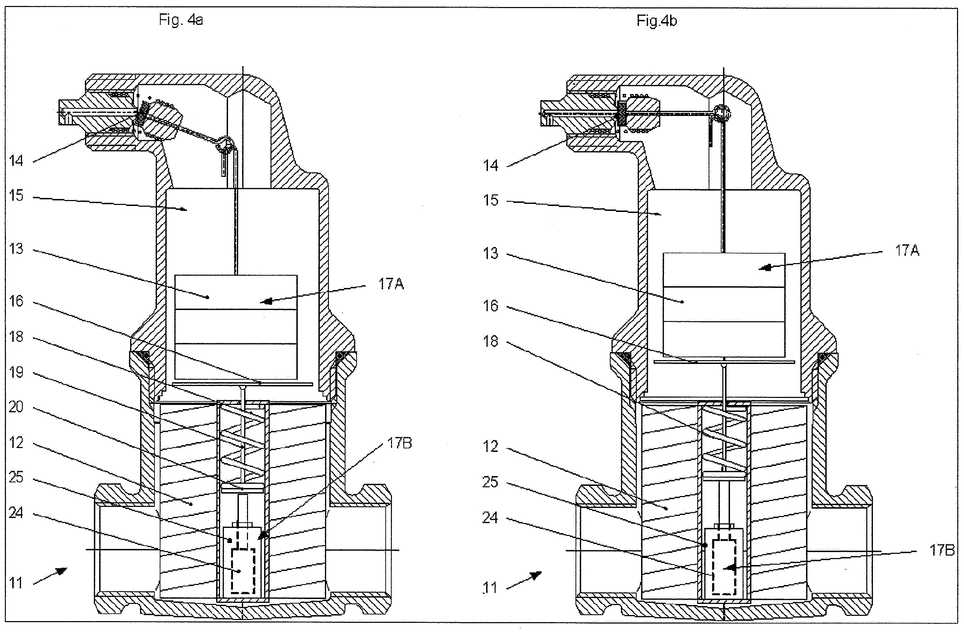

Figs. 4a and 4b show a third embodiment of the degassing device 11 according to the invention. In this example the temperature activatable second valve actuator 17B comprises a wax thermostat. The wax thermostat comprises a quantity of wax 24 contained in a container 25 underneath the abutment surface 20. In the first condition, below the threshold temperature, the wax is solid and has a first volume (see Fig. 4a). In the second condition, above the threshold temperature, the wax is liquid and has a second volume, larger than the first volume (see Fig. 4b). The increase of volume of the wax is used to displace the float support 16 as described with respect to Figs. 2a and 2b.

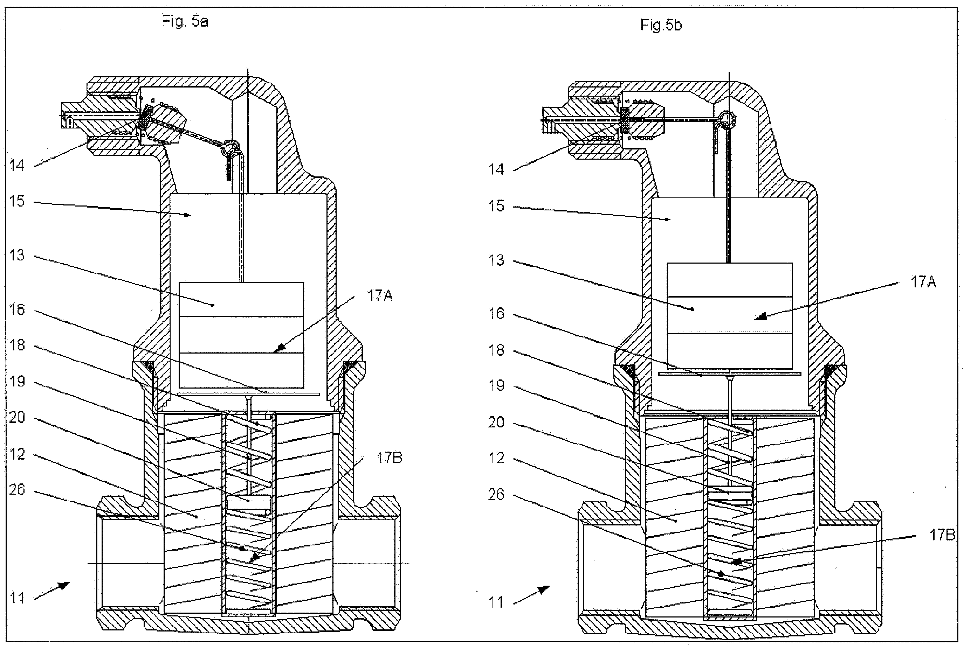

Figs. 5a and 5b show a fourth embodiment of the degassing valve 11 according to the invention. In this example the temperature activatable second valve actuator 17B comprises a helical spring 26 manufactured of a shape memory alloy having a two-way shape memory effect. The two-way shape memory effect is the effect that the material remembers two different shapes: one at a low temperature, and one at a high temperature.

The helical spring 26 may thus be manufactured to have a longer length when not compressed at a high temperature, e.g. close to the boiling temperature of the heating fluid, and to have a shorter length when not compressed at a low temperature, e.g. below the boiling temperature of the heating liquid, preferably at or near the preferred working temperature of the heating liquid. In the first condition, below the threshold temperature, the spring 26 has a first length (see Fig. 5a). In the second condition, above the threshold temperature, the spring 26 has a second length, larger than the first length (see Fig. 5b). The increase of length of the spring 26 is used to displace the float support 16 as described with respect to Figs. 2a and 2b.

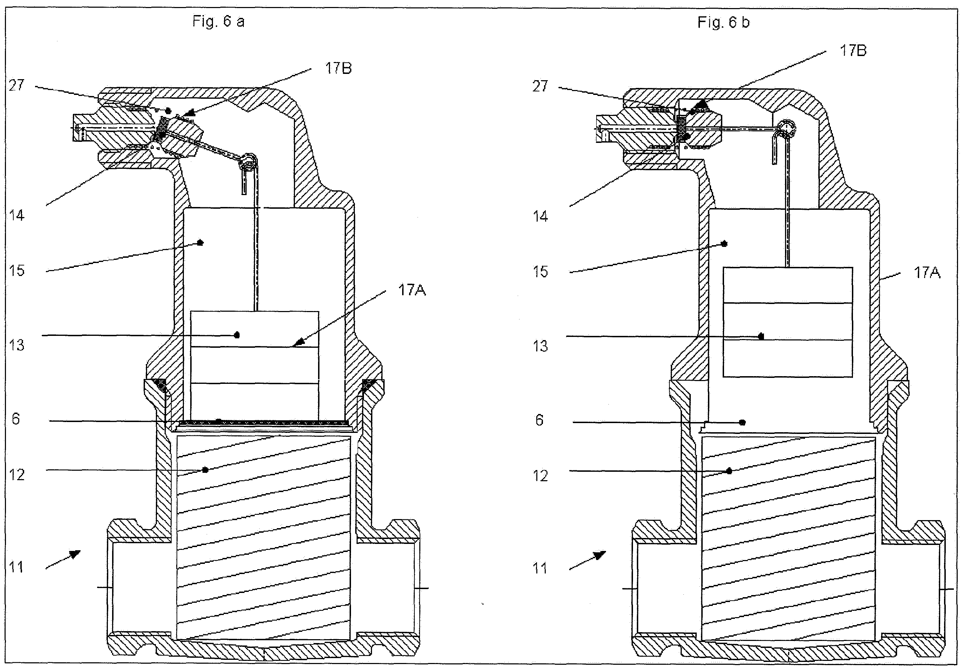

Figs. 6a and 6b show a fifth embodiment of the degassing valve 11 according to the invention. In this example the temperature activatable second valve actuator 17B comprises a valve spring 27 manufactured of a shape memory alloy having a two-way shape memory effect in the actual valve 14.

The valve spring 27 is designed to have a higher stiffness at a high temperature, e.g. close to the boiling temperature of the heating fluid, and to have a lower stiffness at a low temperature, e.g. below the boiling temperature of the heating liquid, preferably at or near the preferred working temperature of the heating liquid. In the first condition, below the threshold temperature, the valve spring 27 has a first stiffness (see Fig. 6a), allowing the float 13 to operate the valve 14. In the second condition, above the threshold temperature, the valve spring 27 has a second stiffness, larger than the first stiffness (see Fig. 6b). The increase of stiffness of the valve spring 27 is used to prevent the float 13 from actuating the valve 14; the weight of the float 13, when not supported by the heating liquid, is insufficient to deform the valve spring 27 to open the valve 14.

It will be appreciated that the first, second, third and fourth embodiment operate the same in that in these embodiments a temperature activated structure is used which expands when the temperature of the structure exceeds a threshold temperature. In Figs. 2a and 2b the threshold temperature is determined by the temperature at which the bi-metal discs 21B snap from one bending mode to the other. In Figs. 3a and 3b the threshold temperature is determined by the temperature the bi-metal plate flexes. In Figs. 4a and 4b the threshold temperature is determined by the melting temperature of the wax. In Figs. 5a and 5b the threshold temperature is determined by the two-way shape memory effect of the helical spring. In all four embodiments the expanding of the structure causes the float support to rise, thus preventing the valve to be actuated by the float.

In all four embodiments, the temperature activated structure is mounted in the housing of the degassing device. The temperature activated structure is connected to the separating structure 12. The temperature activated structure may, however, also be mounted on a support attached to the head 15 of the degassing device 11.

Fig. 7 shows an example of a solar heating system 31 according to the invention. The solar heating system 31 comprises a closed heating liquid circuit 32. The heating liquid in this example is water. The solar heating system further comprises a solar collector 33 for heating the water therein using solar power. A pump 34 pumps the water through the closed circuit 32. The heated water is pumped from the solar collector 33 through piping 35 to a heat exchanger 36. In this example, the heat exchanger 36 is positioned inside a buffer vessel 37. The buffer vessel may comprise a liquid, such as tap water to be heated. The buffer vessel may also comprise a secondary heat exchanger for heating a heating liquid of a secondary closed heating liquid circuit 39. The secondary heating circuit may e.g. be a central heating system of a house. The cooled water is pumped through piping 40 back to the solar collector 33 to be heated again.

The heating liquid, here the water, may comprise dissolved gas. For removing the dissolved gas from the heating liquid the solar heating system 31 comprises a degassing device 41. In this example the degassing device is designed as a micro-bubble degassing device. The degassing device 41 may be designed as the degassing device 11 as described hereinabove. In this example the degassing device 11 is positioned at the exit of the solar collector 33, since at this position the heating liquid has the highest temperature within the closed circuit, so that dissolved gas may be removed most efficiently at this position.

In use, the temperature of the heating liquid is raised within the solar collector 33 by solar energy collected by the solar collector.

In a first situation, the temperature of the heating liquid in the closed circuit 31 is raised to a temperature below the boiling point of the heating liquid. In this first situation, no vapour will be present in the piping and solar collector 33. In the degassing device 11 gas will collect in the head 15. Once the amount of gas is more than the predetermined amount of gas, the float 13 will fall below the critical point and the valve 14 is opened, so that the gas can exit the closed circuit 31. In this first situation, the temperature activated structure 17B is not activated, e.g. not expanded so that the float support 16 is not raised, and does not prevent the float 13 from operating the valve 14.

In a second situation, the temperature of the heating liquid in the closed circuit 31 is raised to a temperature above the boiling point of the heating liquid. In this second situation, vapour may be present in the piping and solar collector 33. It is important to prevent vapour from exiting the closed circuit to avoid heating liquid depletion and/or hazardous situations to occur. In the degassing device 11 gas and/or vapour will collect in the head 15. In this second situation, however, the temperature activated structure is activated, e.g. expanded so that the float support 16 is raised. Even though gas and/or vapour collects in the head 15, the float 13 is prevented from falling with the liquid level in the head 15. Thus, the valve 14 is prevented from opening, so that no gas and/or vapour can exit the closed circuit.

In the foregoing specification, the invention has been described with reference to specific examples of embodiments of the invention. It will, however, be evident that various modifications and changes may be made therein without departing from the broader spirit and scope of the invention as set forth in the appended claims.

In the examples, the degassing device is designed as a microbubble degassing device. It will be appreciated that the degassing device may also be designed as a different type of, automatic, degassing device, such as a Spirotop® Automatic Air Vent.

In the examples of Figs 2-5, the temperature activated structure 17 acts upon the bottom of the float. It will be appreciated that the temperature activated structure may also act directly upon the valve as e.g. in Figs 6a and 6b.

In the examples of Figs 5a-6b the shape memory material is a shape memory alloy. It will be appreciated that shape memory plastics may also be used.

In the examples, the first actuator 17A and second actuator 17B are separate constructions within the degassing device. It will be appreciated that the first and second actuators may also be a combined structure. The second actuator may e.g. be integrated within the float.

In the examples, the heating fluid is water. Other heating fluids are possible, such as glycol or a water/glycol mixture.

However, other modifications, variations and alternatives are also possible. The specifications, drawings and examples are, accordingly, to be regarded in an illustrative rather than in a restrictive sense.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. Degassing device (11) for a solar heating system (31) comprising a closed heating fluid circuit (32),
**characterized in that** the degassing device is designed as a micro-bubble degassing device comprising a valve (14) and
a first valve actuator device (17A) comprising a float (13) arranged for automatically opening the valve (14) for allowing gas to exit the closed fluid circuit when an amount of the gas present in the degassing device is more than a predetermined threshold amount,
wherein a second valve actuator device (17B) comprises a temperature activated structure (21B, 24, 26, 27) and is arranged for automatically closing the valve for preventing gas and/or heating fluid to exit the closed fluid circuit when the temperature of the gas and/or heating fluid is above a predetermined threshold temperature, and for preventing the first valve actuator from opening the valve when the temperature of the gas and/or heating fluid is above the predetermined threshold temperature.

2. Degassing device according to claim 1, wherein the temperature activated structure comprises
a float support (16) for supporting the float (13), and
a structure arranged for positioning the float support in a first position when the temperature of the gas and/or heating fluid is below the threshold temperature, in which first position the float is free to open the valve, and arranged for positioning the float support in a second position when the temperature of the gas and/or heating fluid is above the threshold temperature, in which second position the float is prevented from opening the valve.

3. Degassing device according to any one of the preceding claims, wherein the second valve actuator comprises a bi-metal element (21B).

4. Degassing device according to claim 3, wherein the second valve actuator comprises a stack of bi-metal elements (21B).

5. Degassing device according to claim 3 or 4, wherein the bi-metal element or elements form bi-stable bi-metal elements (21B).

6. Degassing device according to claim 4 or 5, wherein the stack comprises non-bimetal, such as metal, elements (21A) interleaved between the bi-metal elements (21B).

7. Degassing device according to any one of the preceding claims, wherein the second valve actuator comprises a volume of wax (24).

8. Degassing device according to any one of the preceding claims, wherein the second valve actuator comprises a shape memory material (26, 27), such as a shape memory alloy.

9. Degassing device according to any one of the preceding claims, wherein the second valve actuator is bi-stable.

10. Degassing device according to any one of the preceding claims, wherein the predetermined threshold temperature is between 0.8 to 1 times a boiling temperature of the heating fluid, preferably between 0.9 and 0.99 times the boiling temperature, more preferably between 0.95 and 0.98 times the boiling temperature.

11. Solar heating system (31) comprising a closed fluid circuit (32) with a solar collector (33) for heating therein the liquid heating fluid using solar power, a heat exchanger (36), and a degassing device (11) according to any one of claims 1-10 positioned in between the solar collector and the heat exchanger at the exit of the solar collector.

12. Use of a degassing device (11) according to claims 1-10 for degassing a solar heating system (31).

13. Method for degassing a solar heating system (31) comprising a closed heating fluid circuit (32) with a solar collector (33) for heating therein the heating fluid using solar power, a heat exchanger (36), and a degassing device (11) positioned in between the solar collector and the heat exchanger at the exit of the solar collector, **characterized in that** the degassing device is designed as a micro-bubble degassing device comprising a valve (14)
and the method comprises
when an amount of the gas present in the closed circuit is more than a predetermined threshold amount automatically, by a first valve actuator (17B) comprising a float (13), opening the valve for allowing gas to exit the closed fluid circuit, and
when the temperature of the gas and/or heating fluid is above a predetermined threshold temperature automatically, by a second valve actuator (17A) comprising a temperature activated structure (21B, 24, 26, 27), closing the valve for preventing gas and/or heating fluid to exit the closed fluid circuit and preventing the first valve actuator from opening the valve when the temperature of the gas and/or heating fluid is above the predetermined threshold temperature.

## Patentansprüche

1. Entgasungsvorrichtung (11) für ein Solarheizsystem (31), umfassend einen geschlossenen Heizfluidkreis (32),
**dadurch gekennzeichnet, dass** die Entgasungsvorrichtung als Mikroblasen-Entgasungsvorrichtung konzipiert ist, umfassend ein Ventil (14) und
eine erste Ventilbetätigungsvorrichtung (17A), umfassend einen Schwimmer (13), angeordnet zum automatischen Öffnen des Ventils (14), damit das Gas den geschlossenen Fluidkreis verlassen kann, wenn eine Menge des in der Entgasungsvorrichtung anwesenden Gases eine vorbestimmten Schwellenwertmenge überschreitet,
wobei eine zweite Ventilbetätigungsvorrichtung (17B) eine temperaturaktivierte Struktur (21B, 24, 26, 27) umfasst und angeordnet ist, das Ventil automatisch zu schließen, um zu verhindern, dass Gas und/oder Heizfluid den geschlossenen Fluidkreis verlassen, wenn die Temperatur des Gases und/oder des Heizfluids über einer vorbestimmten Schwellenwerttemperatur ist, und um zu verhindern, dass der erste Ventilbetätiger das Ventil öffnet, wenn die Temperatur des Gases und/oder des Gasfluids über der vorbestimmten Schwellenwerttemperatur ist.

2. Entgasungsvorrichtung nach Anspruch 1, wobei die temperaturaktivierte Struktur Folgendes umfasst:
einen Schwimmerträger (16) zum Tragen des Schwimmers (13) und
eine Struktur, angeordnet zum Positionieren des Schwimmerträgers in einer ersten Position, wenn die Temperatur des Gases und/oder des Heizfluids unter der Schwellentemperatur ist, in welcher ersten Position der Schwimmer frei ist, das Ventil zu öffnen, und angeordnet zum Positionieren des Schwimmerträgers in einer zweiten Position, wenn die Temperatur des Gases und/oder des Heizfluids über der Schwellenwerttemperatur ist, in welcher zweiten Position verhindert wird, dass der Schwimmer das Ventil öffnet.

3. Entgasungsvorrichtung nach einem der vorhergehenden Ansprüche, wobei der zweite Ventilbetätiger ein Bimetallelement (21B) umfasst.

4. Entgasungsvorrichtung nach Anspruch 3, wobei der zweite Ventilbetätiger einen Stapel von Bimetallelementen (21B) umfasst.

5. Entgasungsvorrichtung nach Anspruch 3 oder 4, wobei das oder die Bimetallelement(e) bistabile Bimetallelemente (21B) bilden.

6. Entgasungsvorrichtung nach Anspruch 4 oder 5, wobei der Stapel Nicht-Bimetall umfasst, wie etwa Metall, Elemente (21A), verschachtelt zwischen den Bimetallelementen (21B).

7. Entgasungsvorrichtung nach einem der vorhergehenden Ansprüche wobei der zweite Ventilbetätiger ein Volumen von Wachs (24) umfasst.

8. Entgasungsvorrichtung nach einem der vorhergehenden Ansprüche, wobei der zweite Ventilbetätiger ein Formgedächtnismaterial (26, 27) wie etwa eine Formgedächtnislegierung umfasst.

9. Entgasungsvorrichtung nach einem der vorhergehenden Ansprüche, wobei der zweite Ventilbetätiger bistabil ist.

10. Entgasungsvorrichtung nach einem der vorhergehenden Ansprüche, wobei die vorbestimmte Schwellenwerttemperatur das 0,8- bis 1-fache der Siedetemperatur des Heizfluids ist, bevorzugt das 0,9- bis 0,99-fache der Siedetemperatur, bevorzugter das 0,95 bis 0,98-Fache der Siedetemperatur.

11. Solarheizsystem (31), umfassend einen geschlossenen Fluidkreis (32) mit einem Sonnenkollektor (33), um darin das flüssige Heizfluid unter Verwendung von Sonnenenergie zu erhitzen, einen Wärmetauscher (36) und eine Entgasungsvorrichtung (11) nach einem der Ansprüche 1-10, positioniert zwischen dem Sonnenkollektor und dem Wärmetauscher am Ausgang des Sonnenkollektors.

12. Verwendung einer Entgasungsvorrichtung (11) nach einem der Ansprüche 1-10 zum Entgasen eines Solarheizsystems (31).

13. Verfahren zum Entgasen eines Solarheizsystems (31), umfassend einen geschlossenen Heizfluidkreis (32) mit einem Sonnenkollektor (33), um darin das Heizfluid unter Verwendung von Sonnenenergie zu erhitzen, einen Wärmetauscher (36) und eine Entgasungsvorrichtung (11), positioniert zwischen dem Sonnenkollektor und dem Wärmetauscher am Ausgang des Sonnenkollektors, **dadurch gekennzeichnet, dass** die Entgasungsvorrichtung konzipiert ist als eine Mikroblasen-Entgasungsvorrichtung, umfassend ein Ventil (14),
und das Verfahren umfasst,
dass, wenn eine Menge des in dem geschlossenen Kreis anwesenden Gases eine vorbestimmte Schwellenwertmenge überschreitet, ein erster Ventilbetätiger (17B), umfassend einen Schwimmer (13), automatisch das Ventil öffnet, damit Gas den geschlossenen Fluidkreis verlassen kann, und
dass, wenn die Temperatur des Gases und/oder des Heizfluids über einer vorbestimmten Schwellenwerttemperatur ist, ein zweiter Ventilbetätiger (17A), umfassend eine temperaturaktivierte Struktur (21B, 24, 26, 27), automatisch das Ventil schließt, damit kein Gas und/oder Heizfluid den geschlossenen Fluidkreis verlassen kann, und um zu verhindern, dass der erste Ventilbetätiger das Ventil öffnet, wenn die Temperatur des Gases und/oder des Heizfluids über der vorbestimmten Schwellenwerttemperatur ist.

## Revendications

1. Dispositif de dégazage (11) pour un système de chauffage solaire (31) comprenant un circuit de fluide de chauffage fermé (32),
**caractérisé en ce que** le dispositif de dégazage est conçu comme un dispositif de dégazage à micro-bulles comprenant une vanne (14) et
un premier dispositif actionneur de vanne (17A) comprenant un flotteur (13) conçu pour ouvrir automatiquement la vanne (14) afin de permettre au gaz de sortie du circuit de fluide fermé lorsqu'une quantité du gaz présent dans le dispositif de dégazage est supérieure à une quantité seuil prédéterminée,
un deuxième dispositif actionneur de vanne (17B) comprenant une structure activée par la température (21B, 24, 26, 27) et étant conçue pour fermer automatiquement la vanne afin d'empêcher le gaz et/ou le fluide de chauffage de sortir du circuit de fluide fermé lorsque la température du gaz et/ou du fluide de chauffage est supérieure à une température seuil prédéterminée, et afin d'empêcher le premier actionneur de vanne d'ouvrir la vanne lorsque la température du gaz et/ou du fluide de chauffage est supérieure à la température seuil prédéterminée.

2. Dispositif de dégazage selon la revendication 1, dans lequel la structure activée par la température comprend
un support de flotteur (16) pour supporter le flotteur (13) et
une structure conçue pour positionner le support de flotteur dans une première position lorsque la température du gaz et/ou du fluide de chauffage est inférieure à la température seuil, le flotteur étant libre, dans cette première position, d'ouvrir la vanne, et conçue pour positionner le support de flotteur dans une deuxième position lorsque la température du gaz et/ou du fluide de chauffage est supérieure à la température seuil, le flotteur ne pouvant pas, dans cette deuxième position, ouvrir la vanne.

3. Dispositif de dégazage selon l'une des revendications précédentes, dans lequel le deuxième dispositif actionneur de vanne comprend un élément bimétallique (21B).

4. Dispositif de dégazage selon la revendication 3, dans lequel le deuxième dispositif actionneur de vanne comprend un empilement d'éléments bimétalliques (21B).

5. Dispositif de dégazage selon la revendication 3 ou 4, dans lequel l'élément ou les éléments bimétallique(s) constituent des éléments bimétalliques bistables (21B).

6. Dispositif de dégazage selon la revendication 4 ou 5, dans lequel l'empilement comprend des éléments non bimétalliques, tels que des éléments métalliques (21A), intercalés entre les éléments bimétalliques (21B).

7. Dispositif de dégazage selon l'une des revendications précédentes, dans lequel le deuxième dispositif actionneur de vanne comprend un volume de cire (24).

8. Dispositif de dégazage selon l'une des revendications précédentes, dans lequel le deuxième actionneur de vanne comprend un matériau à mémoire de forme (26, 27) tel qu'un alliage à mémoire de forme.

9. Dispositif de dégazage selon l'une des revendications précédentes, dans lequel le deuxième actionneur de vanne est bistable.

10. Dispositif de dégazage selon l'une des revendications précédentes, dans lequel la température seuil prédéterminée est entre 0,8 et 1 fois une température d'ébullition du fluide de chauffage, de préférence entre 0,9 et 0,99 fois la température d'ébullition, de préférence entre 0,95 et 0,98 fois la température d'ébullition.

11. Système de chauffage solaire (31) comprenant un circuit de fluide fermé (32) avec un collecteur solaire (33) pour le chauffage du fluide de chauffage liquide se trouvant à l'intérieur à l'aide de l'énergie solaire, un échangeur thermique (36) et un dispositif de dégazage (11) selon l'une des revendications 1 à 10, positionné entre le collecteur solaire et l'échangeur thermique à la sortie du collecteur solaire.

12. Utilisation d'un dispositif de dégazage (11) selon l'une des revendications 1 à 10, pour le dégazage d'un système de chauffage solaire (31).

13. Procédé de dégazage d'un système de chauffage solaire (31) comprenant un circuit de fluide de chauffage fermé (32) avec un collecteur solaire (33) pour le chauffage du fluide de chauffage à l'aide de l'énergie solaire, un échangeur thermique (36) et un dispositif de dégazage (11) positionné entre le collecteur solaire et l'échangeur thermique à la sortie du collecteur solaire, **caractérisé en ce que** le dispositif de dégazage est conçu comme un dispositif de dégazage à micro-bulles comprenant une vanne (14)
et le procédé comprend
lorsqu'une quantité du gaz présent dans le circuit fermé est supérieure à une quantité seuil prédéterminée, ouverture automatique, par un premier actionneur de vanne (17B) comprenant un flotteur (13), de la vanne afin de permettre au gaz de sortir du circuit de fluide fermé et
lorsque la température du gaz et/ou du fluide de chauffage est supérieure à une température seuil prédéterminée, fermeture automatique, par un deuxième actionneur de vanne (17A) comprenant une structure activée par la température (21B, 24, 26, 27), de la vanne afin d'empêcher le gaz et/ou le fluide de chauffage de sortie du circuit de fluide fermé et d'empêcher le premier actionneur de vanne d'ouvrir la vanne lorsque la température du gaz et/ou du fluide de chauffage est supérieure à la température seuil prédéterminée.
